# EUROPÄISCHE PATENTANMELDUNG

(11) **EP 2 728 707 A2**
(43) Veröffentlichungstag der Anmeldung: **07.05.2014**
(21) Anmeldenummer: 13176157.9
(22) Anmeldetag: 11.07.2013
(51) Int. Cl.: H02J 9/00

(54) **Notstromversorgungseinrichtung**

(30) Priorität: 10.09.2012 DE 102012017803
(71) Anmelder: RWE Effizienz GmbH, 44139 Dortmund (DE)
(72) Erfinder: Wilmes, Alexander, 45133 Essen (DE)
(74) Vertreter: Cohausz & Florack

(57) **Zusammenfassung**

Notstromversorgungssteuervorrichtung 10 umfassend eine erste Kommunikationsschnittstelle 12 zu einem energetisch zumindest aus einer regenerativen Quelle 6 gespeisten Energiespeicher 8 und eine zweite Kommunikationsschnittstelle 14 zu einer Gerätesteuerung 16, wobei die Gerätsteuerung 16 zumindest zwei durch den Energiespeicher 8 gespeiste Geräte 4 steuert, wobei die Gerätesteuerung 16 abhängig von zumindest einem Ladezustand des Energiespeichers 8 und einem die Geräte 4 charakterisierendem Geräteprofil über die zweite Kommunikationsschnittstelle 14 angesteuert ist.

## Beschreibung

### Der Gegenstand betrifft eine

Notstromversorgungssteuervorrichtung sowie ein System mit einer Notstromversorgungssteuervorrichtung als auch ein Verfahren zur Steuerung einer Notstromversorgungssteuervorrichtung.

### Durch die steigende Anzahl an dezentralen

Stromerzeugungsanlagen, insbesondere Photovoltaikanlagen, Kraftwärmekopplungsanlagen, Biomasseanlagen, Kleinwindanlagen oder dergleichen, kommt es zu einer zunehmenden Fluktuation der Stromeinspeisung in das Niederspannungsnetz. Diese stark schwankende Stromeinspeisung in das Niederspannungsnetz stellt Energieversorger sowie Netzbetreiber vor erhebliche technische Probleme.

Eine Lösung zur lokalen Entlastung der Stromversorgungsnetze können dezentrale Energiespeicher für Haushalte oder Kleingewerbebetriebe sein. Mit solchen dezentralen Energiespeichern, die beispielsweise als Akkumulatoren gebildet sind, kann die in dem lokalen Netz in einem Zeitraum den aktuellen Bedarf übersteigende Strom-Einspeisung zwischengespeichert werden und so der Anteil des Eigenverbrauchs des Betreibers der dezentralen Stromversorgungsanlage erhöht werden. Dieser erhöhte Eigenverbrauchsanteil muss nicht mehr über das Stromversorgungsnetz verteilt werden, was zu einer Entlastung der Niederspannungsnetze führt.

Mit der steigenden Anzahl der dezentralen Energiespeicher kommen Fragen der Optimierung des Eigenverbrauchs auf.

Auf der anderen Seite kann ein lokaler Energiespeicher im Falle eines Netzausfalls als Notstromversorgung fungieren. Lokale Notstromversorgungen, beispielsweise als unterbrechungsfreie Stromversorgung (USV) im Bereich von Computern und Kleinservern sind bekannt. Solche lokalen Notstromversorgungen sind mit nur einem einzigen Gerät gekoppelt und ermöglichen es, dieses eine Gerät über eine verlängerte Zeit elektrisch zu betreiben, auch wenn die elektrische Energieversorgung über das Versorgungsnetz ausgefallen ist. Jedoch ist bei diesen lokalen Notstromversorgungen aufgrund der 1 zu 1 Kopplung mit genau einem Gerät eine Komforterhöhung für den Verbraucher nicht realisierbar. Darüber hinaus funktionieren derzeitige Notstromversorgungen derart, dass diese die angeschlossenen Geräte einfach weiterhin mit elektrischer Energie versorgen. Vor diesem Hintergrund lag dem Gegenstand die Aufgabe zugrunde, eine gezielte und individuelle Notstromversorgung für im Haushalt oder Kleingewerbebetrieb angeschlossene technische Geräte zu ermöglichen, so dass technische und wirtschaftliche Schäden durch einen Geräteausfall minimiert sind.

Diese Aufgabe wird gegenständlich durch eine Notstromversorgungssteuervorrichtung nach Anspruch 1, ein System nach Anspruch 8 als auch ein Verfahren nach Anspruch 15 gelöst.

Die gegenständliche Notstromversorgungssteuervorrichtung zeichnet sich dadurch aus, dass diese die bestehende Energieverkabelung innerhalb eines Haushaltes oder eines Kleingewerbebetriebs nutzbar macht und über diese Verkabelung eine Mehrzahl von Geräten mit Energie speisen kann. Hierzu wird der Energiespeicher über eine regenerative Quelle, beispielsweise eine Photovoltaikanlage, eine Windkraftanlage, eine Kraftwärmekopplungsanlage oder dergleichen mit elektrischer Energie gespeist.

Über den für den Haushalt oder den Gewerbebetrieb zentralen Energiespeicher, wobei zentral in diesem Fall dahingehend zu verstehen ist, dass der Energiespeicher zentral für die in dem Haushalt und dem Kleingewerbetrieb angeschlossenen Geräte ist, werden die Geräte gespeist. Die Speisung erfolgt über die bestehende Verkabelung. Dabei kann der Energiespeicher insbesondere über einen Wechselrichter mit der Stromverteilung innerhalb des Gebäudes verbunden sein.

### Im Fall des Stromausfalles des öffentlichen

Energieversorgungsnetzes kann eine Speisung der Geräte mit elektrischer Energie über den Energiespeicher und den Wechselrichter und die bereits vorhandene Verkabelung erfolgen.

Da die Anzahl der Geräte, die an die Energieversorgung innerhalb des Gebäudes angeschlossen sind, groß sein kann, kann deren Energiebedarf sehr hoch sein, was dazu führen kann, dass ein Energiespeicher, der alle oder eine Vielzahl dieser Geräte mit elektrischer Energie speist, sehr schnell leer ist. Es ist jedoch erkannt worden, dass nicht alle angeschlossenen Geräte dauerhaft über den Energiespeicher gespeist werden müssen. So ist es beispielsweise möglich, dass einzelne Geräte im Falle der Notstromversorgung unmittelbar ausgeschaltet werden können, wie beispielsweise bestimmte Lampen oder Geräte der Unterhaltungselektronik. Andere Geräte erlauben es, gewisse Gerätetoleranzen für Ein- und Ausschaltzeiten einzuhalten. Beispielsweise kann eine Gerätetoleranz darin bestehen, dass eine Ausschaltzeit von einer halben Stunde oder einer Stunde möglich ist. Dies kann beispielsweise bei einem Kühlschrank oder einen Gefrierfach der Fall sein oder auch bei einer Zentralheizung oder einem Aquarium.

Ferner gibt es Geräte, die erst nach einer bestimmten Zeit eingeschaltet werden brauchen, wie beispielsweise Waschmaschine oder Trockner. Andere Geräte benötigen stets eine gewisse Energieversorgung, wie beispielsweise eine Alarmanlage, eine Videoüberwachung, eine Telekominfrastruktur oder dergleichen.

All diese Informationen können in Geräteprofilen, wie nachfolgend noch beschrieben wird, hinterlegt sein.

Um die von dem Energiespeicher im hier diskutierten Fall der Notstromversorgung zur Verfügung gestellte Energie "intelligent" aufzuteilen, wird vorgeschlagen, dass die Geräte über eine Gerätesteuerung individuell ansteuerbar sind. Über eine zweite Kommunikationsschnittstelle kann die Notstromversorgungssteuervorrichtung mit einer Gerätesteuerung kommunizieren. Die Gerätesteuerung steuert dann ihrerseits zumindest zwei durch den Energiespeicher gespeiste Geräte.

Die Notstromversorgungssteuervorrichtung steuert die Gerätesteuerung abhängig von zumindest einem Ladezustand des Energiespeichers und einem die Geräte charakterisierenden Geräteprofil an. Das bedeutet, dass mit Hilfe der Notstromversorgungssteuervorrichtung die im Energiespeicher verbleibende Energiemenge mittels einer Ansteuerung der Gerätesteuerung auf die daran angeschlossenen Geräte verteilt wird, wobei bei der Verteilung der Energie das jeweils charakterisierende Geräteprofil und/oder ein Nutzerprofil eines jeden einzelnen Gerätes berücksichtigt ist.

Auf Basis von geräte- und/oder nutzerindividuellen Profilen erfolgt eine zielgerichtete Steuerung der Geräte im Notstromfall. Hierzu wird der lokal vorhandene Energiespeicher als auch eine Gerätesteuerung zur Ansteuerung individueller Geräte nutzbar gemacht.

Mit Hilfe der gegenständlichen
Notstromversorgungssteuervorrichtung erhält ein lokaler Energiespeicher einen zusätzlichen Nutzen für den Anwender,
indem die im Energiespeicher vorhandene Energie "intelligent" im Notstromfall auf die angeschlossenen Geräte verteilt wird.

Die Notstromversorgungssteuervorrichtung kann einen Speicher, beispielsweise eine Datenbank aufweisen. In dem Speicher kann der Ladezustand des Energiespeichers gespeichert sein. Dies ermöglicht der Notstromversorgungssteuervorrichtung bei der Bestimmung ob ein Gerät ein- oder ausgeschaltet werden soll, den unmittelbaren Zugriff auf den Ladezustand des Energiespeichers. Der Ladezustand kann Informationen über zum Beispiel eine Lademenge, eine Ladekapazität, eine bisherige Anzahl an Ladezyklen, eine Temperatur des Speichers, eine Entladekennlinie des Stromspeichers und/oder einem Alter des Energiespeichers umfassen. Anhand dieser Informationen ist es möglich, zu errechnen, wie viel Energie in dem Energiespeicher noch vorhanden ist und wie lange der Energiespeicher eine bestimmte Leistung zur Verfügung stellen kann. Mit Hilfe dieser Information ist es möglich, zu bestimmen, welches Gerät gedrosselt werden muss, welches Gerät ausgeschaltet werden muss und welches Gerät eingeschaltet bleiben kann. Auch ist es möglich, zu bestimmen, dass ein bestimmtes Gerät zu einem bestimmten Zeitpunkt ein- bzw. ausgeschaltet wird. Auch kann eine Restlaufzeit für Geräte bestimmt und gegebenenfalls optimiert werden.

Eine Entladekennlinie kennzeichnet das Entladungsverhalten des Energiespeichers über die Zeit, insbesondere auch abhängig von der Entladestromstärke. Dies kann in einer Spannungs/Zeit Charakteristik angegeben werden.

Außerdem ist es möglich, dass in der
Notstromversorgungssteuervorrichtung ein Grenzwert festgelegt ist, bei dessen Unterschreitung eine Information über den Ladezustand nach außen kommuniziert wird. Hierbei kann eine Information über den unter den Grenzwert, z.B. 5% oder 10% der Ladekapazität des Energiespeichers, gefallenen Ladezustand als elektronische Mitteilung, z.B. als Email, als SMS, als Sprachnachricht oder dergleichen über ein Weitverkehrsnetz an einen zuvor bestimmten Empfänger kommuniziert werden. Diese Mitteilung kann ein Alarm sein. Der Empfänger der Mitteilung kann so frühzeitig auf einen kompletten Ausfall der Stromversorgung reagieren, z.B. ein motorbetriebenes Notstromaggregat beschaffen, Datensicherungen durchführen oder dergleichen.

Um zu bestimmen, welches Gerät wie angesteuert werden muss, ohne nachhaltige Funktionseinbußen zu erfahren, wird vorgeschlagen, dass das die Geräte charakterisierende Geräteprofil ebenfalls in einem Speicher der Notstromversorgungssteuervorrichtung gespeichert ist. Auf diesen Speicher kann zugegriffen werden, um das Geräteprofil auszulesen. Das Geräteprofil kann Informationen zu z.B. einem aktuellen Gerätezustand, einer Gerätepriorität, einer Geräteeinschaltzeit, einer Geräteausschaltzeit, einer Geräterestlaufzeit und/oder einer Gerätetoleranz umfassen.

Ein aktueller Gerätezustand kann beispielsweise eine Information sein, ob das Gerät ein- oder ausgeschaltet ist.
Auch kann ein aktueller Gerätezustand die aktuelle Innentemperatur eines Kühlschranks oder Gefrierschranks sein. Andere Informationen zu dem aktuellen Gerätezustand sind ebenfalls möglich.

Eine Gerätepriorität kann angeben, wie wichtig es ist, dass ein bestimmtes Gerät eingeschaltet bleibt. Eine Alarmanlage oder eine Stromversorgung für einen Server muss sicherlich länger angeschaltet bleiben und somit eine höhere Priorität haben als zum Beispiel ein Fernseher oder ein anderes Gerät der Unterhaltungselektronik.

Eine Geräteeinschaltzeit kann beispielsweise eine Information darüber sein, zu welchem Zeitpunkt ein Gerät eingeschaltet werden muss. Bei einer Telefonzentrale kann dies beispielsweise eine Information sein, dass diese zwischen acht und siebzehn Uhr eingeschaltet sein muss.

Eine Geräteausschaltzeit kann eine Information darüber sein, wann ein Gerät ausgeschaltet werden kann. So ist es beispielsweise bei Kühlschränken möglich, diese weitgehend ohne Beeinträchtigung ihrer Kühlfunktion für einige Zeit auszuschalten. Somit kann in der Gerätausschaltzeit auch die Dauer eines Ausschaltens des Gerätes enthalten sein.

Eine Geräterestlaufzeit kann eine Information darüber sein, wie lange ein Gerät ohne elektrische Energie betrieben werden kann. Bei einem Aquarium kann dies beispielsweise mehrere Tage sein, bis die Pumpe und ein Kunstlicht eingeschaltet werden müssen, ohne dass die Fauna des Aquariums Schaden nimmt.

Eine Gerätetoleranz kann beispielsweise eine Information darüber sein, ob ein Gerät mit geringerer Leistung weiter betrieben werden kann. So kann z.B. ein Kühlschrank, der normalerweise eine Solltemperatur von 3°C hat, mit nur 8°C betrieben werden, ohne dass ein nachhaltiger Schaden eintritt. Auch kann eine Toleranz eine Information darüber sein, ob ein Gerät für gewisse Zeiten ausgeschaltet sein kann, wobei die Zeiten nicht näher bestimmt sein müssen.

All diese Informationen können in dem das Gerät charakterisierenden Geräteprofil gespeichert sein.

Neben der Hinterlegung und Nutzung der Geräteprofile und/oder Nutzerprofilen verfügt die
Notstromversorgungssteuervorrichtung über die Eignung, über eine zweite Kommunikationsschnittstelle mit der Gerätesteuerung zu kommunizieren. Die Gerätesteuerung kann eine Heimautomatisierungssteuerung, beispielsweise ein Smart Home Controller des Smart Home Systems der Anmelderin, der zur Steuerung von Kleingeräte und Haushaltsgeräten geeignet ist, sein. Die Ansteuerung über die zweite
Kommunikationsschnittstelle ermöglicht zumindest das Einschalten und/oder das Ausschalten und/oder das Drosseln eines Gerätes. Ein entsprechender Befehl kann von der Notstromversorgungssteuervorrichtung über die zweite Kommunikationsschnittstelle an die Gerätesteuerung erfolgen. Diese führt dann die entsprechenden Befehle aus, indem sie über ein Kommunikationsprotokoll die entsprechenden Geräte ansteuert.

Es sei angemerkt, dass die
Notstromversorgungssteuervorrichtung integraler Bestandteil einer Gerätesteuerung oder umgekehrt sein kann, d.h. die Notstromversorgungssteuervorrichtung als auch die Gerätesteuerung können in einem gemeinsamen Gehäuse verbaut sein.

Die intelligente Notstromversorgung berücksichtigt die Geräteprofile als auch den aktuellen Ladestand sowie die aktuelle Kapazität des Energiespeichers. Um effizient die zur Verfügung stehende Energie auf die Geräte zu verteilen, ohne dabei ein zu rigides Stromsparregiment einhalten zu müssen, wird vorgeschlagen, dass auch eine prognostizierte Einspeisung, insbesondere in die Bestimmung von Ein- und Ausschaltzeiten für die Geräte einfließt. Daher wird die Gerätesteuerung zusätzlich abhängig von zumindest einer Energieerzeugungsprognose für die regenerative Quelle angesteuert.

Die Energieerzeugungsprognose kann beispielsweise über eine Wettervorhersage, die z.B. über Funk empfangen wird oder durch regelmäßige Speicherung einer aktuellen Wettervorhersage oder auf Basis der letzten gespeicherten Wettervorhersage bestimmt oder errechnet werden. Auch ist es möglich, dass von einer externen Stelle, beispielsweise einer Wetterzentrale oder dem lokalen Netzbetreiber oder einem Energieversorger selbst eine Einspeiseprognose erfolgt. Die Einspeiseprognose kann neben den Wetterdaten die historischen Energieerzeugungswerte der jeweiligen regenerativen Quelle berücksichtigen. D.h., dass aus historischen Daten zusammen mit aktuellen Wetterdaten, wie beispielsweise Anzahl der Sonnenstunden und Sonnenstand berechnet werden kann, wie hoch die erwartete Leistung bzw. die erzeugte Energie ist.

Diese Prognose kann dazu verwendet werden, auch Geräte weiter zu betreiben, die nicht zwingend betrieben werden müssen. Aus den individuellen Geräteprofilen, dem Ladezustand des Energiespeichers, der aktuellen und prognostizierten Einspeisung aus der regenerativen Quelle errechnet und steuert die Notstromversorgungssteuervorrichtung im Notstromfall die jeweiligen Geräte individuell an und optimiert so die gesamte Notstromversorgung "intelligent", derart, dass über einen möglichst langen Zeitraum ein möglichst hoher Komfort bereitgestellt ist.

Die Ansteuerung der Geräte selbst kann dabei über die Gerätesteuerung, die als getrennte Lösung bereits vorhanden sein kann, erfolgen. Die Gerätesteuerung kann beispielsweise steuerbare Steckdosen als auch steuerbare Zwischenstecker enthalten, mit denen besonders einfach ein Gerät ein- und ausgeschaltet werden kann.

Wie Eingangs bereits erwähnt, erfolgt die Gerätesteuerung gemäß einem Ausführungsbeispiel für jedes Gerät individuell. Dies ist notwendig, da jedes Gerät ein individuelles Geräteprofil haben kann und somit individuell abhängig vom aktuellen Ladezustand angesteuert werden muss. Auch können Gruppen von Geräten gesammelt angesteuert werden.

Ein weiterer Aspekt ist ein System mit einer beschriebenen Notstromversorgungssteuervorrichtung und einem aus einer regenerativen Quelle gespeisten Energiespeicher und einer Gerätesteuerung. Der Energiespeicher kann aus Akkumulatoren gebildet sein, die an eine Erzevagungsanlage für elektrischen Strom aus regenerativen Quellen angeschlossen ist. Über einen Wechselrichter ist der Energiespeicher mit dem Energieverteilungsnetz des Gebäudes verbunden. Im Fall eines Stromausfalles dient der Energiespeicher als Notstromaggregat und liefert Strom für die an die Energieversorgung angeschlossenen Geräte. Um diese Geräte intelligent ansteuern zu können und die in dem Energiespeicher verfügbare Ladekapazität optimal zu nutzen, wird mit einer Gerätesteuerung eine individuelle Steuerung einzelner Geräte vorgenommen, so dass die Geräte abhängig von ihren Geräteprofilen ein- und ausgeschaltet oder gedrosselt werden.

Die Informationen zum Ladezustand des Energiespeichers können gemäß einem Ausführungsbeispiel durch den Energiespeicher selbst zur Verfügung gestellt werden. Informationen können in dem Energiespeicher selbst gespeichert sein. Der Energiespeicher kann eine Schaltungslogik aufweisen, mit der der Ladezustand ermittelbar ist. Diese Informationen über den Ladezustand können über die erste Kommunikationsschnittstelle der Notstromversorgungssteuervorrichtung mitgeteilt werden.

Auch kann über die Steuerelektronik des Energiespeichers oder eine getrennte Überwachungsschaltung festgestellt werden, ob ein Netzausfall vorliegt oder nicht. Dies kann dadurch möglich sein, dass der Energiespeicher feststellen kann, ob ein Laden über das öffentliche Stromversorgungsnetz möglich ist oder nicht. Falls nicht, liegt ein Stromausfall vor. Eine solche Information kann an die Notstromversorgungssteuervorrichtung mitgeteilt werden, die dann abhängig von dem Ladezustand des Energiespeichers als auch den Geräteprofilen sowie optional anderen Informationen errechnet, welche Geräte eingeschaltet bleiben, welche Geräte ausgeschaltet werden, zu welchen Zeiten Geräte ausgeschaltet werden können oder welche Geräte gedrosselt werden.

Um im Falle eines Stromausfalles die Energie in das Energieversorgungsnetz des Gebäudes einspeisen zu können, muss die Lade- /Entladesteuerschaltung des Energiespeichers angesteuert werden. Aus diesem Grunde kann die Notstromversorgungssteuervorrichtung über die erste Kommunikationsschnittstelle mit einer Lade/Entladesteuerschaltung in dem Energiespeicher verbunden sein. Hierdurch ist es möglich, dass die Notstromversorgungssteuervorrichtung Einfluss auf die Lade/Entladestrategie des Energiespeichers nimmt. Insbesondere, wenn aufgrund einer Einspeisung aus der regenerativen Quelle Leistung zur Verfügung steht, kann es sinnvoll sein, diese unmittelbar an dem Energiespeicher vorbei (bypass) in das Energieverteilungsnetz des Gebäudes einzuspeisen ohne den Energiespeicher zu laden. Dies führt zu einer Lebensverlängerung des Energiespeichers. Auf der anderen Seite wird die Notstromversorgung aufrechterhalten.

Gemäß einem Ausführungsbeispiel wird vorgeschlagen, dass der Energiespeicher vorzugsweise über einen Wechselrichter mit der elektrischen Hausversorgung verbunden ist und dass die Geräte über die elektrische Hausversorgung mit dem Energiespeicher elektrisch verbunden sind. Der gegenständliche Energiespeicher dient zur Einspeisung von elektrischer Energie in ein Hausversorgungsnetz. Unter einer Hausversorgung kann eine Stromverteilung innerhalb eines Gebäudes oder eines kleinen Gewerbebetriebs verstanden sein. Nicht gemeint mit Hausversorgung ist jedoch das Niederspannungsnetz des Energieversorgers bzw. Netzbetreibers. Insbesondere ist ein Hausversorgungsnetz ein solches Energieverteilungsnetz, welches abnehmerseitig hinter dem Stromübergabepunkt des Netzbetreibers liegt. Um sicherzustellen, dass die Energie lediglich in das Hausversorgungsnetz eingespeist wird, kann ein Schalter vorgesehen sein, der bei Stromausfall die Hausversorgung von dem Energieversorgungsnetz abkoppelt, so dass die Energie des Energiespeichers lediglich in das Hausversorgungsnetz eingespeist wird. In diesem Fall sollte netzseitig eine Überwachung vorliegen, ob der Stromausfall beendet ist, um die Hausversorgung wieder an das Niederspannungsnetz anzuschließen, i.e. den Schalter wieder zu schließen.

Gemäß einem Ausführungsbeispiel wird vorgeschlagen, dass die Gerätesteuerung eine Heimautomatisierungssteuerung ist. Eine Heimautomatisierungssteuerung kann kabelgebunden als auch drahtlos über ein Kommunikationsprotokoll mit verschiedenen Geräten kommunizieren. Geräte der Heimautomatisierung können schaltbare Steckdosen, Dimmer, Schalter, Rolladensteuerungen, Heizungsstellventile, Alarmzentralen Beleuchtungseinrichtungen oder dergleichen sein. Auch können Geräte der Heimautomatisierung solche Elektrokleingeräte sein, die über einen eigenen Controller verfügen, der das Protokoll der Heimautomatisierung unterstützt. Dann können die Geräte unmittelbar über die Gerätesteuerung angesteuert werden.

Insbesondere wird vorgeschlagen, dass die Gerätesteuerung über ein Kommunikationsprotokoll mit den Geräten kommuniziert. Ein Kommunikationsprotokoll kann beispielsweise das von der Anmelderin eingesetzte cosIP Protokoll sein. Andere Kommunikationsprotokolle können beispielsweise auch ZigBee, LON, EIB oder dergleichen sein.

Auch wird vorgeschlagen, dass die Gerätesteuerung die über die zweite Kommunikationsschnittstelle empfangenen Befehle in über das Kommunikationsprotokoll an die Geräte übermittelbare Stellbefehle wandelt. Das Protokoll, welches zwischen der Gerätesteuerung und der Notstromversorgungssteuervorrichtung über die zweite Schnittstelle verwendet wird, kann ein anderes sein, als das Protokoll zwischen den Geräten und der Gerätesteuerung. Aus diesem Grunde können die empfangenen Befehle von der zweiten Kommunikationsschnittstelle in Stellbefehle für die Geräte umgewandelt werden und dann an die Geräte übermittelt werden.

Auch wird vorgeschlagen, dass die Gerätesteuerung Zustandsinformationen zu den Geräten über das Kommunikationsprotokoll empfängt. Diese Zustandsinformationen können über die zweite Kommunikationsschnittstelle an die Notstromversorgungsschnittstelle übermittelt werden. Zustandsinformationen können beispielsweise Informationen darüber sein, ob die Geräte ein- oder ausgeschaltet sind. Auch können Zustandsinformationen beispielsweise Temperaturinformationen sein, so können beispielsweise Kühlschränke die aktuelle Kühltemperatur übermitteln. Aus diesen Informationen kann ermittelt werden, wie lange ein Gerät, z.B. ein Kühlschrank, stromlos geschaltet bleiben kann, ohne dass die darin gelagerte Ware verdirbt.

Eine Heizungssteuerung kann beispielsweise eine Ist-Temperatur übermitteln. Anhand der Ist-Temperatur ist es möglich, festzustellen, ob eine Aktivierung der Heizung notwendig ist. Insbesondere können bei einer Heizungssteuerung bestimmte Stellventile mit einer höheren Priorität ausgestattet sein als andere, so dass diese möglichst lange geöffnet bleiben und beispielsweise genau ein Raum aufgeheizt bleibt, wohingegen der Rest der Räume nicht geheizt wird, indem die diesem Raum zugeordneten Ventile geschlossen und gegebenenfalls stromlos geschaltet werden. Im Notstromfall führt dies dazu, dass auch eine Gasheizung weniger Strom verbraucht, da im Betrieb der Gasheizung ebenfalls elektrische Energie notwendig ist. Wenn nur ein einziger Raum geheizt bleibt, sinkt auch der Stromverbrauch der Zentralheizung, da diese seltener aktiviert werden muss. Dies führt auch zu einer verminderten Nutzung des Energiespeichers und zu einer größeren Zeit, die der Stromausfall überbrückt werden kann.

Gemäß einem Ausführungsbeispiel wird vorgeschlagen, dass in der Gerätesteuerung die Geräteprofile gespeichert sind. Dabei ist es möglich, beispielsweise von einem Dienstleister über ein Weitverkehrsnetz, z.B. über das Internet, Geräteprofile zu empfangen. So ist es beispielsweise möglich, schaltbare Steckdosen verschiedenen Geräteklassen zuzuordnen, beispielsweise Lampe, Kühlschrank, Alarmanlage, Heizung oder dergleichen, abhängig davon, welche Geräte daran angeschlossen sind. Nach Zuordnung zu den Geräteklassen können für die einzelnen Geräteklassen von einem Dienstleister über beispielsweise das Internet Geräteprofile empfangen werden, anhand derer die Notstromversorgungssteuervorrichtung eine intelligente Verteilung der im Energiespeicher gespeicherten elektrischen Energie im Fall des Stromausfalls bewirkt.

Auch können die Geräteprofile Nutzerwünsche enthalten, die durch einen Nutzer, beispielsweise über einen PC oder eine Webschnittstelle in der Gerätesteuerung angegeben werden können. Dabei kann der Nutzer beispielsweise angeben, welchen Raum er im Falle eines Stromausfalles geheizt haben möchte. Die diesem Raum zugeordneten Stellventile würden dann eine höchste Priorität erhalten und möglichst lange offen gehalten, wohingegen andere Stellventile im Fall des Stromausfalls geschlossen werden. Das Öffnen und Schließen der Stellventile kann über die Gerätesteuerung erfolgen, wenn die Stellventile Teil der Heimautomatisierungssteuerung sind. Auch kann der Nutzer angeben, dass er bestimmte Lampen einschalten möchte, wohingegen andere Lampen ausgeschaltet werden können. Die diesen Lampen zugeordneten Schaltaktoren können ebenfalls mit einer höheren Nutzerpriorität versehen werden.

Die Nutzerprioritäten und die Geräteprioritäten, die über die Geräteprofile erhältlich sind, können in der
Notstromversorgungssteuervorrichtung gewichtet werden, so dass festgestellt werden kann, bei welchem Ladezustand welches Gerät noch mit elektrischer Energie versorgt werden darf und welches nicht mehr. Entsprechend kann die Gerätesteuerung dann die Geräte ansteuern und ein- bzw. ausschalten.

Die Geräteprofile können auch in den Geräten selbst gespeichert sein und von der Gerätesteuerung von den Geräten empfangen werden. Dies ist beispielsweise bei Geräten der Fall, die einen Controller für die Heimautomatisierungssteuerung bereits integriert haben. Dies können beispielsweise intelligente Waschmaschinen oder Kühlschränke sein, die ihre Geräteprofile bereits gespeichert haben. Solche Geräteprofile können dann von den Geräten an die Gerätesteuerung übertragen werden.

Die in der Gerätesteuerung vorhandene Geräteprofile können über die zweite Kommunikationsschnittstelle an die Notstromversorgungssteuervorrichtung übermittelt werden. In der Notstromversorgungssteuervorrichtung werden die Geräteprofile gespeichert. Anhand der Geräteprofile als auch des Ladezustands des Energiespeichers kann errechnet werden, welche Geräte eingeschaltet bleiben und welche Geräte ausgeschaltet werden und anhand dieser Information kann darüber hinaus errechnet werden, wie lange der Energiespeicher Energie zur Verfügung stellen kann. Wenn dann in diese Berechnung noch eine Einspeiseprognose der generativen Quelle einfließt, kann eine Steuerung der Geräte derart erfolgen, dass möglichst lange Energie über den Energiespeicher verfügbar ist.

Beispielsweise ist es möglich, dass bis zu einem bestimmten Ladezustand eine Komfortschaltung aufrechterhalten bleibt, d.h. dass eine Mehrzahl von Geräten die auch geringere Priorität haben, angeschaltet bleiben. Unterschreitet der Ladezustand einen unteren Grenzwert, so kann eine rigidere Stromsparstrategie angewandt werden, bei der die Notstromversorgungssteuervorrichtung weitere Geräte, mit höherer Priorität, ausschaltet. Hierbei können beispielsweise auch Nutzerpräferenzen überregelt werden, so dass nur noch die den Geräten eigenen Profile für die Bestimmung des Ein- bzw. Ausschaltens verwendet werden. Unterschreitet der Ladezustand dann noch einen weiteren unteren Grenzwert, der noch niedriger liegt, so können alle Geräte bis auf die zwingend notwendigen Geräte, z.B. mit der höchsten Priorität, ausgeschaltet werden. Zwingend notwendige Geräte können beispielsweise eine Alarmanlage, eine Stromversorgung für einen Server oder eine Telekommunikationsanlage sein.

Die bereits erwähnte Alarmnachricht beim Unterschreiten eines Grenzwertes kann darüber hinaus genutzt werden, dass zwingend notwendige Arbeiten abgeschlossen werden, ehe die Stromversorgung vollständig zusammenbricht und/oder dass andere Maßnahmen der Stromerzeugung rechtzeitig ergriffen werden.

Ein weiterer Aspekt ist ein Verfahren zur Steuerung einer Notstromversorgungssteuervorrichtung umfassend Empfangen zumindest einer Information zu einem Ladezustand eines aus einer regenerativen Quelle gespeisten Energiespeichers, Bestimmen eines Betriebsmodus für jedes aus zumindest zwei Geräten abhängig von dem empfangenen Ladezustand und zumindest zwei gespeicherten Geräteprofilen und Übertragen des Betriebsmodus für jedes Gerät an einer Gerätesteuerung. Ein Betriebsmodus eines Gerätes kann zumindest die Information darüber sein, ob das Gerät aus- oder eingeschaltet wird. Ein Betriebsmodus kann jedoch auch ein gedrosselter Betrieb eines Geräte sein oder einen Zeitplan enthalten, zu dem das Gerät eingeschaltet ist und zu dem das Gerät ausgeschaltet ist. Andere Betriebsmodi sind ebenfalls möglich.

Die zuvor genannten Verfahren können auch als Computerprogramm oder als auf einem Speichermedium gespeichertes Computerprogramm realisiert werden. Hierbei kann ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Nachfolgend wird der Gegenstand anhand einer ein Ausführungsbeispiel zeigenden Zeichnung näher erläutert. In der Zeichnung zeigt:

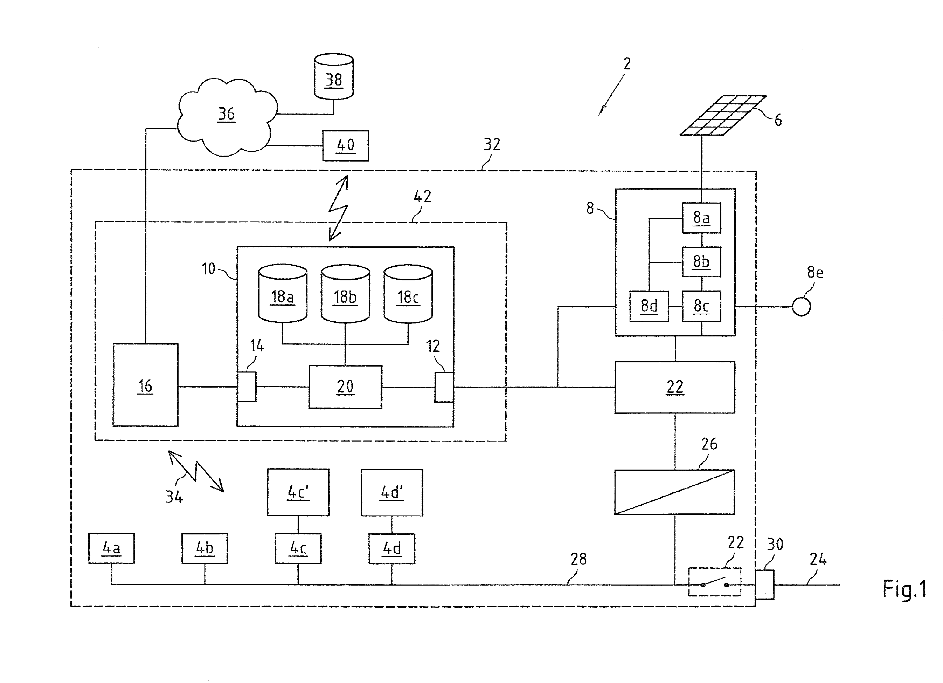

- Fig. 1: einen schematischen Aufbau eines Systems gemäß einem Ausführungsbeispiel.

Fig. 1 zeigt ein System 2 zur Notstromversorgung einer Mehrzahl von Geräten 4a-4d durch einen von einer regenerativen Quelle 6 gespeisten Energiespeicher 8.

Hierzu ist eine Notstromversorgungssteuervorrichtung 10 vorgesehen, die über eine erste Kommunikationsschnittstelle 12 mit dem Energiespeicher 8 und über eine zweite Kommunikationsschnittstelle 14 mit einer Gerätesteuerung 16 kommuniziert.

In der Notstromversorgungssteuervorrichtung 10 sind verschiedene Speicher 18a-c vorgesehen. In dem Speicher 18a können Geräteprofile und/oder Nutzerprofile wie Gerätestatus und Geräteereignisse oder Nutzerpräferenzen zu Geräten gespeichert werden. In dem Speicher 18b können Einspeiseprognosedaten gespeichert werden. In dem Speicher 18c können Ladezustandsinformationen des Energiespeichers 8 gespeichert werden.

In der Notstromversorgungssteuervorrichtung 10 ist darüber hinaus ein Prozessor 20 vorgesehen der mittels eines entsprechend programmierten Computerprogramms derart angesteuert ist, dass er aus den in den Speichern 18a-c enthaltene Informationen im Falle eines Stromausfalles eine Energiesparstrategie für die Geräte 4 entwickelt und aus dieser Energiesparstrategie ermittelten Befehle zum Steuern der Geräte über die zweite Kommunikationsschnittstelle 14 der Gerätesteuerung 16 mitteilt, die entsprechend die Geräte 4 ansteuert.

In dem Energiespeicher 8 sind diverse Akkumulatoren 8a-c in Reihe und/oder parallel zueinander geschaltet und mit der regenerativen Quelle 6 im vorliegenden Fall einer Photovoltaikanlage verbunden.

In dem Energiespeicher 8 ist eine Steuerschaltung 8d vorhanden, die zum Einen zur Ladesteuerung bzw. Entladesteuerung der Energiespeicher 8a-c eingesetzt ist und zum Anderen die Ladezustände der jeweiligen Energiespeicher 8a-c überwacht. Darüber hinaus kommuniziert die Steuerschaltung 8d über die erste Kommunikationsschnittstelle 12 mit der Notstromversorgungssteuervorrichtung 10. Die Verbindung zwischen der ersten Kommunikationsschnittstelle 12 und der Steuerschaltung 8d kann drahtgebunden oder drahtlos sein.

An dem Energiespeicher 8 kann ein Anschluss 8e für ein Elektrofahrzeug vorhanden sein. Das Elektrofahrzeug kann über die generative Quelle 6 geladen werden und beispielsweise im Falle des Stromausfalles als weiterer Energiespeicher dienen.

Eine Überwachungsschaltung 22 überwacht, ob der Energiespeicher 8 an das öffentliche Energieversorgungsnetz 24 angeschlossen ist. Insbesondere wird überwacht, ob das öffentliche Energieversorgungsnetz 24 elektrische Energie zur Verfügung stellt oder nicht. Gegebenenfalls, falls keine Energie zur Verfügung gestellt wird, kann über die Überwachungsschaltung 22 ein Steuersignal an die erste Kommunikationsschnittstelle 12 übermittelt werden, die dann die Energiesparstrategie abhängig vom Ladezustand des Energiespeichers 8 einleitet. Die Schaltung 22 kann auch zwischen einem Hausanschluss und dem Wechselrichter angeordnet sein, wie gestrichelt dargestellt, und einen Schalter enthalten, um das Energieversorgungsnetz 24 von dem Hausversorgungsnetz 28 abzukoppeln bzw. anzukoppeln.

Der Energiespeicher 8 ist über einen Wechselrichter 26 mit den Hausverteilnetz 28 verbunden. Außerdem ist der Wechselrichter 26 mit den öffentlichen Energieversorgungsnetz 24 über den Hausanschlusspunkt 30 verbunden.

Die Notstromversorgungssteuervorrichtung 10 ist dazu eingerichtet, die in dem Energiespeicher 8 vorhandene Energie im Falle eines Stromausfalles intelligent auf die Geräte 4 zu verteilen. Die Geräte 4 sind alle an das Hausverteilnetz 28 angeschlossen.

Ein Hausverteilnetz 28 kann ein Verteilnetz sein, welches Geräte 4 miteinander verbindet, die allesamt hinter dem Hausanschlusspunkt 30 liegen. Das Hausverteilnetz 28 ist das in herkömmlicher Weise bereits installierte Niederspannungsnetz für Spannungen zwischen 230 und 380 V. Zu erkennen ist, dass das Hausverteilnetz 28 sowie Energiespeicher 8, Notstromversorgungssteuervorrichtung 10 und Gerätesteuerung 16 als auch die Geräte 4 innerhalb eines Gebäudes 32 angeordnet sind. Ein Gebäude 32 kann ein Wohnhaus sein. Auch kann ein Gebäude 32 ein Gebäudekomplex sein, beispielsweise in einem kleinen Gewerbebetrieb. Unter Gebäude 32 kann eine solche bauliche Einheit verstanden werden, in der Geräte 4 über ein Hausverteilnetz 28 miteinander verbunden sind, die allesamt hinter einem Hausanschlusspunkt 30, vom öffentlichen Versorgungsnetz 24 aus gesehen, angeordnet sind.

Wie bereits erläutert, kommuniziert die Notstromversorgungssteuervorrichtung 10 über die zweite Kommunikationsschnittstelle 14 mit der Gerätesteuerung 16. Die Gerätesteuerung 16 kommuniziert im gezeigten Beispiel drahtlos über eine Luftschnittstelle 34 mit den Geräten A-4d.
Das über die Luftschnittstelle 34 verwendete
Kommunikationsprokoll kann ein Protokoll der
Heimautomatisierung sein, wie es hinlänglich bekannt ist.

Die Geräte 4 können beispielsweise schaltbare Steckdosen 4c sein. An eine schaltbare Steckdose 4c kann beispielsweise ein Fernseher 4c' angeschlossen sein. Ein weiteres Gerät 4d kann beispielsweise ein Dimmer sein an den eine Lampe 4d' angeschlossen ist. Der Fernseher 4c' als auch die Lampe 4d' verfügen nicht über Mittel, um unmittelbar mit der Gerätesteuerung 16 zu kommunizieren. Daher sind zwischengeschaltete Geräte 4c, 4d vorgesehen, über die eine Steuerung der daran angeschlossenen Geräte möglich ist, insbesondere das Ein-/ Ausschalten als auch das Drosseln.

Ein weiteres Gerät 4 kann beispielsweise eine Alarmzentrale 4b sein, die als solche bereits dazu eingerichtet sein kann, über die Luftschnittstelle 34 mit der Gerätesteuerung 16 zu kommunizieren. Schließlich kann ein Gerät 4 eine Heizungssteuerung 4a sein, die über Stellventile verfügt, mit denen einzelne Heizstränge ein- und ausgeschaltet werden können.

Die Geräte 4a und 4b können integrierte Geräteprofile aufweisen. So ist es beispielsweise möglich, dass das Geräteprofil der Heizungssteuerung 4a angibt, dass diese im Falle eines Stromausfalles gedrosselt betrieben werden kann, d.h. dass die Solltemperatur einige Grad Celsius gegenüber der vom Nutzer eingestellten Solltemperatur automatisch abgesenkt wird. Dieses Geräteprofil kann über die Luftschnittstelle 34 an die Gerätesteuerung 16 übertragen werden.

Über eine Schnittstelle (nicht dargestellt) kann ein Nutzer das Geräteprofil um weitere persönliche Wünsche (Nutzerpräferenz, Nutzerprofil) ergänzen. Ein persönlicher Wunsch kann beispielsweise sein, dass ein bestimmter Raum geheizt bleibt, wohingegen andere Räume abgeschaltet werden können. Diese persönlichen Profile können mit den Geräteprofilen über die zweite Kommunikationsschnittstelle an die Notstromversorgungssteuervorrichtung 10 übertragen werden und dort in dem Speicher 18a gespeichert werden. Dasselbe gilt für die nachfolgend diskutierten Geräteprofile ebenfalls.

Die Alarmzentrale 4b kann ebenfalls ein integriertes Geräteprofil aufweisen. In dem integrierten Geräteprofil kann beispielsweise gespeichert sein, dass Alarmsensoren, d.h. beispielsweise Fensterüberwachungssensoren, aktiviert bleiben und somit eine Außenhautsicherung aktiviert bleibt. Bewegungsmelder können beispielsweise deaktiviert werden, so dass eine Innenüberwachung nicht mehr möglich ist. Darüber hinaus kann ein Außenalarm deaktiviert werden, wohingegen ein stiller Alarm, der lediglich eine Kommunikationsschnittstelle zu einem Wachdienst haben muss, aktiviert bleiben kann.

Der Fernseher 4c kann beispielsweise kein eigenes Geräteprofil enthalten. Das Geräteprofil der schaltbaren Steckdose 4c kann ebenfalls leer sein. Ein Nutzer kann in der Gerätesteuerung 16 dem Geräteprofil der schaltbaren Steckdose 4c persönliche Wünsche zuordnen und er kann dem Geräteprofil der schaltbaren Steckdose 4c zuordnen, zu welcher Kategorie das daran angeschlossene Gerät 4c gehört. In diesem Fall wäre beispielsweise die Kategorie "Unterhaltungselektronik". Über das Internet 36 könnte von einem externen Dienstleister 38 an die Gerätesteuerung 16 ein Geräteprofil übertragen werden, welches für Geräte der Kategorie "Unterhaltungselektronik" geeignet ist. Dieses Geräteprofil könnte beispielsweise vorsehen, dass solche Geräte eine sehr geringe Priorität haben und im Falle des Stromausfalles unmittelbar oder nach einer Latenz von einigen Minuten ausgeschaltet werden.

Auch eine Lampe 4d' hat beispielsweise kein eigenes Geräteprofil. Das Geräteprofil des Dimmers 4d kann die Information enthalten, dass eine Drosselung möglich ist. Über die Gerätesteuerung 16 kann diesem Geräteprofil durch den Nutzer beispielsweise Informationen zugeordnet werden, dass die an dem Dimmer 4d angeschlossenen Lampe 4d' nur zu bestimmten Zeiten, beispielsweise zwischen 18 und 23 Uhr im gedrosselten Betrieb einschaltbar bzw. eingeschaltet sein soll.

Neben den Geräteprofilen in dem Speicher 18a ist in dem Speicher 18b eine Einspeiseprognose enthalten. Diese Einspeiseprognose kann beispielsweise über Funk von einem externen Dienstleister 40 empfangen werden. Der Dienstleister 40 kann Informationen zu Sonnenstand und Sonnenscheindauer übertragen. Aus diesen Informationen kann zusammen mit historischen Energieerzeugungsdaten der regenerativen Quelle 6 errechnet werden, wie groß die erzeugte elektrische Leistung zu einer bestimmten Zeit ist und somit mit welcher Energie der Energiespeicher 8 in Zukunft aufgeladen werden wird. Auch ist es möglich, dass der Dienstleister 40 technische Daten der regenerativen Quelle 6 kennt und anhand der aktuellen Wetterprognose errechnet, wie groß die elektrische Leistung der regenerativen Quelle 6 ist und wie groß die daraus resultierende Einspeiseenergie ist. Diese Information kann beispielsweise in einer Tagesganglinie an die Notstromversorgungssteuervorrichtung 10 übertragen werden. Anhand dieser Tagesganglinie kann der Prozessor 20 feststellen, wie der Energiespeicher 8 nachgeladen wird.

Da der Prozessor 20 auch Informationen darüber hat, welche Geräte 4 eingeschaltet sind bzw. wie lange welche Geräte 4 einschaltet sind, insbesondere auch aus den Geräteprofilen entnehmen kann, welche elektrische Leistung einzelne Geräte 4 beziehen, kann der Prozessor errechnen, wie lange der Energiespeicher 8 zusammen mit der regenerativen Quelle 6 die Geräte 4 betreiben kann.

Wenn eine untere Schwelle erreicht wird, beispielsweise dass ein Betrieb im aktuellen Modus nur noch vier Stunden möglich ist, kann eine aggressivere Stromsparstrategie durch den Prozessor 20 angewandt werden und es können beispielsweise Geräte 4 geschaltet werden, die eine geringere Priorität haben. Dies kann beispielsweise die Lampe 4d' betreffen, so dass der Dimmer 4d nicht mehr in der vom Nutzer gewünschten Zeit eingeschaltet werden kann. Auch kann die Heizungssteuerung 4a derart betroffen sein, dass die in dem Geräteprofil gespeicherte Temperaturabsenkung nicht mehr ausreichend ist, sondern lediglich nur noch ein einziger Raum beheizt werden wird. Dies führt auch zu einer geringeren Energieaufnahme einer Gasheizung, da diese seltener eingeschaltet werden muss.

Die Wetterprognose bzw. die Einspeiseprognose kann auch über das Internet 36 und die Gerätesteuerung 16 an die Notstromversorgungssteuervorrichtung 10 übertragen werden.

Mit Hilfe der gezeigten Notstromversorgungssteuervorrichtung 10 ist es möglich, im Falle eines Stromausfalles verschiedene Stromsparstrategien anzuwenden. Die Stromsparstrategien können abhängig vom Ladezustand eines Energiespeichers 8 ausgewählt werden. Anhand der Stromsparstrategie kann ausgewählt werden, dass einzelne Geräte 4 ausgeschaltet oder gedrosselt betrieben werden. Andere Geräte 4 können selbst bei der rigideren Stromsparstrategie solange betrieben werden, bis der Energiespeicher 8 vollständig entleert ist. Durch die Berücksichtigung einer Einspeiseprognose kann eine komfortablere Stromsparstrategie gewählt werden, da Kenntnisse darüber vorliegen, dass der Energiespeicher 8 eventuell wieder aufgeladen wird.

Abschließend sei angemerkt, dass die Gerätesteuerung 16 als auch die Notstromversorgungssteuervorrichtung 10 in einem gemeinsamen Gehäuse 42 verbaut sein können. Auch ist es auch möglich, dass die Notstromversorgungssteuervorrichtung 10 und der Energiespeicher 8 in einem gemeinsamen Gehäuse verbaut sind.

## Patentansprüche

1. Notstromversorgungssteuervorrichtung umfassend:
- eine erste Kommunikationsschnittstelle zu einem energetisch zumindest aus einer regenerativen Quelle gespeisten Energiespeicher und
- eine zweite Kommunikationsschnittstelle zu einer Gerätesteuerung, wobei die Gerätsteuerung zumindest zwei durch den Energiespeicher gespeiste Geräte steuert,
- wobei die Gerätesteuerung abhängig von zumindest einem Ladezustand des Energiespeichers und einem die Geräte charakterisierendem Geräteprofil über die zweite Kommunikationsschnittstelle angesteuert ist.

2. Notstromversorgungssteuervorrichtung nach Anspruch 1,
**dadurch gekennzeichnet, dass** der Ladezustand des Energiespeichers in einem Speicher gespeichert ist und dass der Ladezustand des Energiespeichers Informationen zumindest zu
A) einer Lademenge,
B) einer Anzahl Ladezyklen
C) einer Ladekapazität,
D) einer Temperatur des Energiespeichers,
E) einer Entladekennlinie des Energiespeichers, und/oder
F) einem Alter des Energiespeicher
umfasst.

3. Notstromversorgungssteuervorrichtung nach Anspruch 1 oder 2, **dadurch gekennzeichnet, dass** das die Geräte charakterisierende Geräteprofil in einem Speicher gespeichert ist und dass das Geräteprofil Informationen zumindest zu
A) einem aktuellen Gerätezustand,
B) einer Gerätepriorität,
C) einer Geräteeinschaltzeit,
D) einer Geräteausschaltzeit,
E) einer Geräterestlaufzeit, und/oder
F) einer Gerätetoleranz,
umfasst.

4. Notstromversorgungssteuervorrichtung nach einem der vorangehenden Ansprüche, **dadurch gekennzeichnet, dass** die Ansteuerung über die zweite Kommunikationsschnittstelle zumindest das Einschalten und/oder das Ausschalten und/oder das Drosseln eines Gerätes umfasst.

5. Notstromversorgungssteuervorrichtung nach einem der vorangehenden Ansprüche, **dadurch gekennzeichnet, dass** die Gerätesteuerung zusätzlich abhängig von zumindest einer Energieerzeugungsprognose für die regenerative Quelle angesteuert ist.

6. Notstromversorgungssteuervorrichtung nach einem der vorangehenden Ansprüche, **dadurch gekennzeichnet, dass** abhängig von lokal vorhandenen Informationen die Energieerzeugungsprognose errechenbar ist und/oder dass die Energieerzeugungsprognose von einem räumlich entfernt angeordneten Rechner über ein Weitverkehrsnetz empfangbar ist und/oder dass die Energieerzeugungsprognose in einem Speicher gespeichert ist und/oder dass die Energieerzeugungsprognose regelmäßig aktualisiert ist.

7. Notstromversorgungssteuervorrichtung nach einem der vorangehenden Ansprüche, **dadurch gekennzeichnet, dass** die Gerätesteuerung für jedes Gerät individuell angesteuert ist.

8. System mit
- einer Notstromversorgungssteuervorrichtung nach einem der vorangehenden Ansprüche,
- einem aus einer regenerativen Quelle gespeisten Energiespeicher und
- einer Gerätesteuerung.

9. System nach Anspruch 8, **dadurch gekennzeichnet, dass** in dem Energiespeicher Informationen zu einem Ladezustand gespeichert ist.

10. System nach Anspruch 8 oder 9, **dadurch gekennzeichnet, dass** in dem Energiespeicher eine Lade/Entladesteuerschaltung angeordnet ist und dass die Lade/Entladesteuerschaltung über die erste Kommunikationsschnittstelle mit der Notstromversorgungssteuervorrichtung verbunden ist.

11. System nach einem der Ansprüche 8 bis 10, **dadurch gekennzeichnet, dass** der Energiespeicher vorzugsweise über einen Wechselrichter mit der elektrischen Hausversorgung verbunden ist und dass die Geräte über die elektrische Hausversorgung mit dem Energiespeicher elektrisch verbunden sind.

12. System nach einem der Ansprüche 8 bis 11, **dadurch gekennzeichnet, dass** die Gerätesteuerung eine Heimautomatisierungssteuerung ist.

13. System nach einem der Ansprüche 8 bis 12, **dadurch gekennzeichnet, dass** die Gerätsteuerung über ein Kommunikationsprotokoll mit den Geräten kommuniziert und/oder dass die Gerätsteuerung die über die zweite Kommunikationsschnittstelle empfangenen Befehle in über das Kommunikationsprotokoll an die Geräte übermittelbare Stellbefehle wandelt und/oder dass die Gerätesteuerung Zustandinformationen zu den Geräten über das Kommunikationsprotokoll empfängt und über die zweite Kommunikationsschnittstelle an die Notstromversorgungssteuervorrichtung übermittelt.

14. System nach einem der Ansprüche 8 bis 13, **dadurch gekennzeichnet, dass** in der Gerätsteuerung die Geräteprofile gespeichert sind und/oder dass die Gerätesteuerung von den Geräten die in den Geräten gespeicherten Geräteprofile empfängt und/oder dass die Gerätesteuerung die Geräteprofile über die zweite Kommunikationsschnittstelle an die Notstromversorgungssteuervorrichtung übermittelt.

15. Verfahren zur Steuerung einer
Notstromversorgungssteuervorrichtung umfassend:
- Empfangen zumindest einer Information zu einem Ladezustand eines aus einer regenerativen Quelle gespeisten Energiespeichers,
- Bestimmen eines Betriebsmodus für jedes aus zumindest zwei Geräten abhängig von dem empfangenen Ladezustand und zumindest zwei gespeicherten Geräteprofilen, und
- Übertragen des Betriebsmodus für jedes Gerät an eine Gerätsteuerung.
